(19) **Europäisches Patentamt European Patent Office Office européen des brevets**

(11) **EP 1 539 888 B1**

(12) **EUROPEAN PATENT SPECIFICATION**

(45) Date of publication and mention
of the grant of the patent:
**09.07.2008 Bulletin 2008/28**

(51) Int Cl.:
***C09D 5/03*** (2006.01)

(21) Application number: **03795050.8**

(86) International application number:
**PCT/GB2003/003626**

(22) Date of filing: **20.08.2003**

(87) International publication number:
**WO 2004/024834 (25.03.2004 Gazette 2004/13)**

(54) **POWDER COATING COMPOSITIONS**

PULVER-ÜBERZUGSMITTELZUSAMMENSETZUNG

COMPOSITIONS D'ENROBAGE PULVERULENTES

(84) Designated Contracting States:
**AT BE BG CH CY CZ DE DK EE ES FI FR GB GR HU IE IT LI LU MC NL PT RO SE SI SK TR**

(30) Priority: **16.09.2002 GB 0221430**

(43) Date of publication of application:
**15.06.2005 Bulletin 2005/24**

(73) Proprietor: **INEOS Silicas Limited Warrington, Cheshire, WA5 1AB (GB)**

(72) Inventors:
• **GIBSON, Robin Riyadh County Durham, DL12 9PF (GB)**
• **TOFT, Alexis John Warrington, Cheshire WA4 2SZ (GB)**

(74) Representative: **Collingwood, Anthony Robert et al Marks & Clerk Sussex House 83-85 Mosley Street Manchester, M2 3LG (GB)**

(56) References cited:
**EP-A- 0 881 193           WO-A-01/94512 US-A- 5 684 066**

• **DATABASE WPI Section Ch, Week 197452 Derwent Publications Ltd., London, GB; Class A17, AN 1974-89266V XP002261946 & JP 49 036747 A (OHASHI CHEM IND LTD), 5 April 1974 (1974-04-05)**

EP 1 539 888 B1

**Description**

This invention relates to powder coating compositions and In particular to compositions comprising an organic resin and a zeolite.

Powder coating compositions are well known. They comprise powder compositions suitable for forming a coating on a substrate to which they are applied in the form of a powder and the coating is formed on the substrate by heating and fusing the applied powder. They contain essentially no solvent and, hence, there are virtually no emissions during application or curing. The cured film is relatively thin and it therefore necessary to include a relatively high level of pigmentation to achieve satisfactory opacity. The most common pigment used in powder coating compositions is titanium dioxide, but this is expensive. In view of the high level of pigmentation, it is necessary to use pigments with a low oil absorption, in order to minimise any deleterious effects on the properties of the cured film. Hence, it is difficult to reduce the cost of the coating composition by adding materials such as calcium carbonate etc. to extend the titanium dioxide, since such materials generally have a high oil absorption. Materials which have been used to extend titanium dioxide in powder coatings are lithopone and barium sulphate but these are relatively ineffective extenders.

US 5,684,066 discloses a powder coating composition comprising, among other ingredients, an inorganic compound which can be anhydrous sodium potassium aluminosilicate.

One object of this invention is to provide a powder coating composition which produces a finished coating with desirable properties and is less expensive than compositions based on non-extended titanium dioxide.

According to the invention, a powder coating composition comprises a mixture, In particulate form, of a zeolite and an organic resin according to claim 2.

In general, the empirical formula of a zeolite is

$$M_{2/n}O \cdot Al_2O_3 \cdot xSiO_2 \cdot yH_2O$$

wherein M represents a metallic cation having a valency of n, x indicates the ratio of atoms of silicon to atoms of aluminium and y indicates the ratio of molecules of water to atoms of aluminium. Many different types of zeolite, with varying ratios of silica to alumina, are known. Commonly, however, M is an alkali metal and a preferred alkali metal is sodium, for economic reasons.

The zeolites used in this invention may have the structure of any of the known zeolites. The structure and characteristics of many zeolites are described in the standard work "Zeolite Molecular Sieves" by Donald W. Breck, published by Robert E. Krieger Publishing Company. Usually, the value of x in the above empirical formula is in the range 1.5 to 10. The value of y, which represents the amount of water contained in the voids of the zeolite, can vary widely. In anhydrous material y = 0 and, in fully hydrated zeolites, y may be up to 5. However, for zeolites which are useful in the current invention, the value of y is such that the water content of the zeolite is less than 9 per cent by weight, as determined by heating at 800° C for 1 hour.

Zeolites useful in this invention may be based on naturally-occurring or synthetic aluminosilicates and the preferred forms of zeolite have the structure known as zeolite P or zeolite A. Particularly preferred forms of zeolite are those disclosed in EP-A-0 384 070, EP-A-0 565 364, EP-A-0 697 010, EP-A-0 742 780, WO-A-96/14270, WO-A-96/34828 and WO-A- 97/06102, the entire contents of which are incorporated herein by this reference. The zeolite P described in EP-A-0 384 070 has the empirical formula given above in which M represents an alkali metal and x has a value up to 2.66, preferably in the range 1.8 to 2.66, and which is particularly useful in the present invention.

The amount of water, determined by heating at 800° C for 1 hour, ("total water") present in the zeolite used in the invention is below 9 per cent by weight, but is preferably less than 8.5 per cent by weight. More preferably, the total water in the zeolite is less than 7 per cent by weight.

The water present in the zeolite can produce undesirable effects if it is released during fusion of the coating. An estimate of water which may be released during fusion of the coating can be obtained by heating the zeolite at 105° C for 4 hours. The water loss under these conditions ("moisture content") should preferably be below 2 per cent by weight. More preferably, the moisture content of the zeolite is below 1 per cent by weight.

The zeolite preferably has a weight mean particle size as determined by Malvern Mastersizer™ in the range 0.5 μm to 6.0 μm. Preferably, the weight mean particle size is in the range 1.0 μm to 4.0 μm.

The organic resin which is present in the powder coating composition can be any organic resin which is suitable for preparing powder coatings. It may be a thermoplastic resin or a thermosetting resin.

Suitable thermoplastic resins include plasticised poly(vinyl chloride), polyamides, polyolefins and poly(vinylidene fluoride). Preferably, the plasticised poly(vinyl chloride) is a homopolymer of vinyl chloride. Preferred polyamides are nylon-11 and nylon-12.

Polyethylene and polypropylene, which may be modified by grafting of carboxylic acid or anhydride groups onto the polymer backbone, are suitable polyolefins.

Many thermosetting resins have been used in powder coatings and may be used in the compositions of this invention. Suitable resins include epoxy resins, polyester resins, hybrid epoxy-polyester resins, urethane resins and acrylic resins.

Epoxy resins are characterised by the presence of an epoxide group and the most commonly used resins are diglycidyl ethers of bisphenol A, derived from bisphenol A and epichlorohydrin. Such resins are cured after application to a substrate by means of a curing agent, such as a polyamine or a polyamide, and such a curing agent is present in the composition of the invention when epoxy resins are used.

Many polyesters are suitable for use in this invention and are well known in the art of powder coatings. The polyesters are usually prepared from polybasic acids or their esterifiable derivatives and from polyols. Carboxyl-rich and hydroxyl-rich polymers are suitable. Typical polyesters include esters of terephthalic acid, isophthalic acid, trimellitic acid, adipic acid or sebacic acid with ethylene glycol, 1,2-propylene glycol, trimethylol propane, a butanediol, glycerol or tris(hydroxyethyl)isocyanurate. Normally, polyesters are cured after application and preferred curing agents are triglycidyl isocyanurate (TGIC) and hydroxyalkyl amides, such as those sold under the Trademark PRIMID.

The urethane polymers which are used in powder coating compositions are often urethane polyesters. These are typically prepared by reaction of a polyester with a caprolactam-blocked polyisocyanate, this reaction occurring after application of the powder to the substrate. Hence, for these systems, the organic resin consists of a mixture of polyester resin and blocked polyisocyanate. Suitable polyesters are, for example, polyesters of terephthalic acid, isophthalic acid or trimellitic acid with neopentyl glycol. Commonly, these are cured using adducts of isophorone diisocyanate and low molecular weight polyols, such as polyethylene glycols or polypropylene glycols, the adducts being blocked with caprolactam. Other suitable curing agents include caprolactam-blocked toluene diisocyanate.

When powder coating compositions according to the invention additionally contain pigmentary titanium dioxide, the zeolite acts as an extender for the titanium dioxide. A preferred powder coating according to the invention comprises a mixture, in particulate form, of a zeolite, an organic resin and pigmentary titanium dioxide, said zeolite containing less than 9 per cent water by weight determined by heating at 800° C for 1 hour. Hence, another aspect of the invention is the use of such a zeolite as an extender for the titanium dioxide in such a powder coating composition.

When the finished (cured) coating is white, the powder coating according to the invention usually contains from 10 to 40 per cent by weight pigmentary titanium dioxide. Preferably, the amount of titanium dioxide present is from 20 to 30 per cent by weight of the coating.

Powder coatings which produce a coloured finished coating often contain pigmentary titanium dioxide in addition to at least one coloured pigment. In such systems, the amount of pigmentary titanium dioxide is frequently In the range 2 to 20 weight per cent of the composition and commonly in the range 5 to 15 weight per cent of the composition.

The amount of zeolite in white or coloured compositions is usually up to 50 per cent of the combined weight of zeolite and pigmentary titanium dioxide. Preferably, the amount of zeolite is up to 30 per cent of the combined weight of zeolite and pigmentary titanium dioxide In the composition. For optimum properties (i.e. good opacity at an economical cost) the amount of zeolite is usually from 10 to 25 per cent of the combined weight of zeolite and titanium dioxide.

Thus, a typical white powder coating according to the invention comprises up to 20 weight per cent zeolite and, more commonly, from 1 to 10 weight per cent zeolite. A typical coloured powder coating composition comprises up to 10 weight per cent of zeolite and, more commonly, from 0.5 to 8 per cent by weight zeolite.

In addition to the zeolite and titanium dioxide, coloured powder coating compositions according to the invention also comprise at least one coloured pigment. Suitable pigments may be organic or inorganic pigments, as conventionally used in powder coating compositions. In view of the fact that the powder coatings are heated after application, suitable pigments usually need to be stable up to a temperature of at least 150° C and preferably up to 250° C. Iron oxides and heat-stable organic pigments have been successfully used.

The powder coating compositions of the invention frequently contain additional components often used in such compositions, such as catalysts and curing accelerators, flow control additives, UV stabilisers, antifoams and matting agents.

It is generally necessary to mix intimately the ingredients of the powder coating compositions of the invention in order to achieve a satisfactorily homogeneous finished coating. Commonly used methods of producing an intimate mixture include melt-mixing and dry blending.

In the melt-mixing process, dry ingredients (zeolite, organic resin and any other components) are weighed into a batch mixer such as a high intensity impeller mixer, a medium intensity plough mixer or a tumble mixer. Mixing times depend upon the equipment used. For high intensity mixers, the mixing time is usually in the range 1 to 5 minutes and the mixing time in a tumble mixer is frequently in the range 30 to 60 minutes. The premix thus formed is then compounded together with any liquid ingredients in a high shear extruder such as a single screw extruder (e.g. Buss Ko-kneader) or a twin screw extruder. It is important to ensure that the combination of temperature of the mixture and residence time for thermosetting compositions is such that little or no curing takes place in the extruder, although the temperature is usually slightly above the melting point of the organic resin. The appropriate processing temperature is chosen to suit the resin present in the composition, but is usually in the range 60 to 140° C. Residence time in the extruder is usually in the range 0.5 to 2 minutes. The extruded material is usually cooled rapidly by water cooling and broken into pellets or chips with a size of about 5 to 10 mm. These pellets or chips are then ground to an appropriate particle size using conventional techniques. Frequently, thermoplastic resins need to be ground using cryogenic techniques.

The powder coating compositions can also be prepared by dry blending and this technique is particularly suitable where the organic resin is plasticised poly(vinyl chloride). All the ingredients are agitated in a high speed mixer at an elevated temperature in order to achieve intimate mixing.

The average particle size of the powder coating compositions prepared by grinding the melt-mixed material or by dry blending depends to some extent on the method by which the powder is to be applied and the thickness of the coating to be applied. When the powder is to be applied by electrostatic spraying the average particle size is usually in the range 10 to 75 $\mu$m. For fluidised bed coating and thicker coatings, the particle size of the powder coating compositions is generally in the range 40 to 200 $\mu$m.

The powder coating compositions according to the invention are suitable for coating on a substrate using any method normally used for coating substrates with powder coatings. The precise nature of the organic resin will often determine the optimum conditions for application.

The powder coating composition can be applied to a substrate using a fluid bed in which the particles of powder coating composition are fluidised and the substrate is introduced into the fluidised bed. An electrostatic fluidised bed process using ionised air can also be used. The substrate is earthed and, consequently, the charged powder is attracted to the substrate.

Very commonly, powder coating compositions are applied by electrostatic spray coating. Typically, the powder coating composition is stored in a fluidised-bed reservoir and passed into an air stream where it is charged by passing through, for example, a corona discharge field.

The finished coating is formed by fusing the powder. For thermoplastic resins the applied powder coating composition must be heated to a temperature above the melting point of the resin so that the particles melt and fuse together. For thermosetting resins, the coating is heated to a temperature at which the resin or its precursors are cured into a coating which flows sufficiently to produce a uniform coating on the substrate. The appropriate temperature depends principally upon the actual resin or resins used and is readily determined by a person skilled in the art of powder coatings.

The following tests have been used to measure the parameters which characterise this invention.

Total Water Content

An accurately weighed sample of zeolite (approximately 2.5 g) is placed in a silica crucible and heated in a muffle furnace at 800° C for 1 hour. The sample is cooled to room temperature in a sealed desiccator. The loss in weight is measured and expressed as a percentage of the original weight.

Moisture Content

An accurately weighed sample of zeolite (approximately 3 g) was placed in a weighing dish and heated in an oven at 105° C for 4 hours. The sample was cooled to room temperature in a sealed desiccator. The loss in weight was measured and expressed as a percentage of the original weight.

Weight Mean Particle Size

The weight mean particle size is determined using a Malvern Mastersizer™ model X, with a lens range up to 300 mm RF and MS17 sample presentation unit. This instrument, made by Malvern Instruments, Malvern, Worcestershire, uses the principle of Mie scattering, utilising a low power He/Ne laser. Before measurement the sample is dispersed ultrasonically in water for 7 minutes to form an aqueous suspension. This suspension is stirred before it is subjected to the measurement procedure outlined in the instruction manual for the instrument, utilising the 300 mm RF lens range in the detector system. The Malvern Mastersizer™ measures the weight particle size distribution of the inorganic material or reference material. The weight mean particle size ($d_{50}$) or 50 percentile is readily obtained from the data generated by the instrument.

Oil Absorption

The oil absorption is determined by the ASTM spatula rub-out method (American Society of Test Material Standards D 281). The test is based on the principle of mixing linseed oil with the zeolite by rubbing with a spatula on a smooth surface until a stiff putty-like paste is formed which will not break or separate when it is cut with a spatula. The oil absorption is then calculated from the volume of oil (V cm$^3$) used to achieve this condition and the weight, W, in grams, of zeolite by means of the equation:

$$\text{Oil absorption} = (V \times 100)/W,$$

i.e. expressed in terms of cm$^3$ oil/100 g zeolite.

60° Gloss

The gloss (60°) values of the cured coatings were measured using a Sheen Tri-microgloss 20-60-85 (160) unit. Gloss is a measurement of the intensity of a reflected incident beam, where the incident beam is projected at 60° to the perpendicular of the coating plane as described in ASTM D 523.

Colour

Colour was determined using an X-rite 938 Spectrodensiometer. This unit measures the L*, a*, b* tristimulus values as described using the CIE 1976 L*, a*, b* (CIELAB) Colour Space where the L* axis describes lightness, a* describes the axis from redness (positive a* values) to greenness (negative a* values) and b* describes the axis from yellowness (positive b* values) to blueness (negative b* values).

Contrast Ratio

The contrast ratio is measured using an X-rite 938 Spectrodensiometer. The contrast ratio is the extent to which a coating hides or obscures the contrasting features of a test substrate. In this instance, contrast ratio is expressed photometrically as the ratio of the luminous (CIE-Y) reflection of the coating measured over a black substrate and the luminous (CIE-Y) reflection of the same coating measured over a white substrate.

Impact

The impact resistance of coatings was conducted using ASTM D2794, with indentation to 2.5mm at 223 cm/kg (40 lb/ft).

Cupping Test

This test was carried out using an Erichsen Cupping tester as described in BS 3900 E4 which forces a spherical steel ball into the uncoated side of a metallic substrate until the depth of the cup is no more that 18mm. The depth of indentation at which the coating was visually observed to crack or split is recorded.

UV Stability

UV stability was determined through exposure of cured powder coating samples to emissions from a Xenon lamp with daylight filter for given periods (1000 or 2000 hrs continuous). Equipment used was Q-Sun 1000 Zenon Lamp unit with daylight filter under conditions of irradiance at 0.8 W/m$^2$ at 420 nm and temperature of 50° C.
The invention is illustrated by the following non-limiting examples.

**EXAMPLES**

**Example 1**

A variety of epoxy-polyester powder coating compositions was prepared according to the formulations given in Table 1 below. Sample A was a standard composition containing titanium dioxide and Samples B to D were similar but various proportions of the titanium dioxide had been substituted by a Zeocros™ E110, a zeolite sold by INEOS Silicas Limited, Warrington, England. This is a zeolite MAP (maximum aluminium P-type) with an average particle size of 2 μm by Malvern Mastersizer™, a Total Water Content of 8.0 per cent by weight and an oil absorption of 50 cm$^3$/100 g.

**TABLE 1**

|  | Sample A | Sample B | Sample C | Sample C |
|---|---|---|---|---|
| Epoxy resin (Vantico 6064)[1] | 32.5 | 32.5 | 32.5 | 32.5 |
| 50/50 Polyester/epoxy resin (Reafree 6877)[2] | 32.5 | 32.5 | 32.5 | 32.5 |
| Flow aid (Resiflow PV88)[3] | 0.8 | 0.8 | 0.8 | 0.8 |
| Benzoin | 0.4 | 0.4 | 0.4 | 0.4 |
| Barytes (Airwhite AW10)[4] | 3.8 | 3.8 | 3.8 | 3.8 |
| Titanium dioxide (Kronos 2310)[5] | 30.0 | 27.0 | 22.5 | 15.0 |
| Zeolite (Zeocros E110) | - | 3.0 | 7.5 | 15.0 |

[1]Available from Vantico Ltd. Ickleton Road, Duxford, Cambridge, UK.
[2]Available from Cray Valley Products, Waterloo Works, Machen, UK.
[3]Available from Worlee-Chemie GmbH, VB Hamburg, Siegfried Handt, Grusonstr. 22, Hamburg, Germany
[4]Available from Viaton Industries Ltd., Brassington, Carsington, UK.
[5]Available from Kronos Europe SA/NV. Rue de l'Hopital, Brussels, Belgium.

The amounts in Table 1 are proportions by weight.

The powder coating compositions were prepared as follows. The resins and pigments were dry blended in a 5 litre tumble mixer for 5 minutes. The dry blend was then fed through a hopper and processed through a Prism 16 mm twin screw extruder at 110/60° C (screw speed 270 rpm at 70% torque). The extrudates were then ground in a Fritsch P14 mill at 18,000 rpm and sieved through a 125 $\mu$m sieve to give a powder having an average particle size of approximately 50 $\mu$m.

The powder coating compositions were then applied to clean 15 X 10 cm aluminium Q-panels by Mitsuba corona discharge gun using 60 kV charge so that the final (post-cure) film thickness was from 60 to 70 $\mu$m.

The applied coatings were heated at 180° C for 10 minutes to cure. The cured coatings were assessed for Gloss, Colour, Contrast Ratio, Impact, and in a Cupping Test and the results are reported in Table 2 below.

**TABLE 2**

|  |  | Sample A | Sample B | Sample C | Sample D |
|---|---|---|---|---|---|
| Gloss |  | 94 | 91 | 90 | 90 |
| Colour | $\delta$L* | std | -0.27 | -0.88 | -1.67 |
|  | $\delta$a* | std | +0.05 | +0.06 | -0.01 |
|  | $\delta$b* | std | -0.20 | -0.60 | -0.80 |
|  | $\delta$E | std | +0.34 | +1.07 | +1.85 |
| Contrast Ratio | 50 $\mu$m | 97% | 97% | 96% | 93% |
|  | 90 $\mu$m | 99% | 99% | 98% | 98% |
| Impact (Category) |  | 1 | 1 | 1 | 1 |
| Cupping Test |  | 7 mm | 7 mm | 7 mm | 7 mm |

The samples were also exposed to UV radiation (see UV Stability test) and the effect of UV exposure on gloss measured. Results are shown in Table 3 below.

**TABLE 3**

| Exposure (hrs) | | 0 | 50 | 100 | 260 | 428 | 1000 |
|---|---|---|---|---|---|---|---|
| Gloss | A | 94 | 93 | 87 | 61 | 46 | 18 |
| | B | 91 | 91 | 83 | 62 | 45 | 18 |
| | C | 90 | 89 | 84 | 57 | 41 | 14 |
| | D | 90 | 89 | 81 | 51 | 34 | 9 |

## Example 2

A variety of white polyester-Primid powder coating compositions was prepared according to the formulations given in Table 4 below. Sample E was a standard composition containing titanium dioxide and Samples F to H were similar but various proportions of the titanium dioxide had been substituted by Zeocros™ E110, as used in Example 1.

**TABLE 4**

| | Sample E | Sample F | Sample G | Sample H |
|---|---|---|---|---|
| Polyester resin (UCB V7630)[6] | 60 | 60 | 60 | 60 |
| bis-N,N-dihydroxyethyladipamide (Primid XL-552)[7] | 3.2 | 3.2 | 3.2 | 3.2 |
| Flow aid (Resiflow PV88) | 0.8 | 0.8 | 0.8 | 0.8 |
| Benzoin | 0.2 | 0.2 | 0.2 | 0.2 |
| Barytes (Airwhite AW10) | 5.8 | 5.8 | 5.8 | 5.8 |
| Titanium dioxide (Kronos 2310) | 30.0 | 27.0 | 22.5 | 15.0 |
| Zeolite (Zeocros E110) | - | 3.0 | 7.5 | 15.0 |
| [6]Available from UCB (Chem) Ltd., UCB House, 3 George St., Watford, UK [7]Available from EMS Chemie, Kugelstrasse 22, Mannedorf, Switzertand. | | | | |

The amounts in Table 4 are proportions by weight.

The powder coating compositions were prepared as follows. The resins and pigments were dry blended in a 5 litre tumble mixer for 5 minutes. The dry blend was then fed through a hopper and processed through a Prism 16 mm twin screw extruder at 110/60° C (screw speed 270 rpm at 70% torque). The extrudates were then ground in a Fritsch P14 mill at 18,000 rpm and sieved through a 125 $\mu$m sieve to give a powder having an average particle size of approximately 50 $\mu$m.

The powder coating compositions were then applied to clean 15 X 10 cm aluminium Q-panels by Mitsuba corona discharge gun using 60 kV charge so that the final (post-cure) film thickness was from 60 to 70 $\mu$m.

The applied coatings were heated at 180° C for 10 minutes to cure. The coatings were assessed for Gloss, Colour, Contrast Ratio, Impact, and in a Cupping Test and the results are reported in Table 5 below.

**TABLE 5**

| | | Sample E | Sample F | Sample G | Sample H |
|---|---|---|---|---|---|
| Gloss | | 82 | 85 | 88 | 86 |
| Colour | $\delta L^*$ | std | -0.23 | -0.27 | -0.53 |
| | $\delta a^*$ | std | +0.02 | +0.05 | +0.08 |
| | $\delta b^*$ | std | -0.29 | -0.32 | -0.09 |
| | $\delta E$ | std | +0.37 | +0.42 | +0.54 |
| Contrast Ratio | 50 $\mu$m | 98% | 98% | 96% | 96% |
| | 90 $\mu$m | 100% | 99% | 98% | 98% |
| Impact (Category) | | 3 | 1 | 1 | 1 |

(continued)

|  | Sample E | Sample F | Sample G | Sample H |
|---|---|---|---|---|
| Cupping Test | 7 mm | 7 mm | 7 mm | 7 mm |

The samples were also exposed to UV radiation (see UV Stability test) and the effect of UV exposure on gloss measured. Results are shown in Table 6 below.

**TABLE 6**

| Exposure (hrs) | | 0 | 54 | 100 | 189 | 267 | 523 | 1000 | 1504 | 2000 |
|---|---|---|---|---|---|---|---|---|---|---|
| Gloss | E | 82 | 84 | 84 | 83 | 84 | 83 | 83 | 82 | 82 |
| | F | 85 | 85 | 85 | 85 | 86 | 84 | 83 | 82 | 81 |
| | G | 88 | 86 | 88 | 87 | 86 | 87 | 87 | 81 | 83 |
| | H | 86 | 87 | 87 | 86 | 86 | 86 | 86 | 84 | 84 |

### Example 3

A variety of coloured polyester-Primid powder coating compositions was prepared according to the formulations given in Table 7 below. Samples I and K were standard coloured compositions and Samples J to L were similar but in each case 25% of the titanium dioxide had been substituted by Zeocros™ E110, as used in Example 1.

**TABLE 7**

|  | Sample I | Sample J | Sample K | Sample L |
|---|---|---|---|---|
| Polyester resin (UCB V7630) | 60 | 60 | 60 | 60 |
| *bis*-N,N-dihydroxyethyladipamide (Primid XL-552) | 3.2 | 3.2 | 3.2 | 3.2 |
| Flow aid (Resiflow PV88) | 0.8 | 0.8 | 0.8 | 0.8 |
| Benzoin | 0.2 | 0.2 | 0.2 | 0.2 |
| Barytes (Airwhite AW 10) | 5.8 | 5.8 | 5.8 | 5.8 |
| Titanium dioxide (Kronos 2310) | 10.0 | 7.5 | 10.0 | 7.5 |
| Zeolite (Zeocros E110) | - | 2.5 | - | 2.5 |
| Blue pigment (Blue BGP)[8] | 3.0 | 3.0 | - | - |
| Yellow pigment (Bayferrox Oxide YW3910)[9] | - | - | 3.0 | 3.0 |
| [8]Available from Albion Chemicals Group, Rawdon House, Green Lane, Yeadon, Leeds, UK. [9]Available from Bayer plc, Bayer House Strawberry, Newbury, UK. | | | | |

The amounts in Table 7 are proportions by weight

The powder coating compositions were prepared as follows. The resins and pigments were dry blended in a 5 litre tumble mixer for 5 minutes. The dry blend was then fed through a hopper and processed through a Prism 16 mm twin screw extruder at 110/60° C (screw speed 270 rpm at 70% torque). The extrudates were then ground in a Fritsch P14 mill at 18,000 rpm and sieved through a 125 $\mu$m sieve to give a powder having an average particle size of approximately 50 $\mu$m.

The powder coating compositions were then applied to clean 15 X 10 cm aluminium Q-panels by Mitsuba corona discharge gun using 60 kV charge so that the final (post-cure) film thickness was from 60 to 70 $\mu$m.

The applied coatings were heated at 180° C for 10 minutes to cure. The coatings were assessed for Gloss, Colour, Contrast Ratio, Impact, and in a Cupping Test and the results are reported in Table 8 below.

**TABLE 8**

|  |  | Sample I | Sample J | Sample K | Sample L |
|---|---|---|---|---|---|
| Gloss |  | 83 | 81 | 84 | 82 |
| Colour | $\delta L^*$ | std | -2.13 | std | -1.98 |
|  | $\delta a^*$ | std | +2.26 | std | +0.43 |
|  | $\delta b^*$ | std | +0.87 | std | +1.29 |
|  | $\delta E$ | std | +3.23 | std | +2.40 |
| Contrast Ratio | 50 $\mu$m | 100% | 100% | 97% | 97% |
|  | 90 $\mu$m | 100% | 100% | 98% | 98% |
| Impact (Category) |  | 2 | 2 | 2 | 1 |
| Cupping Test |  | 7 mm | 7 mm | 7 mm | 7 mm |

The samples were also exposed to UV radiation (see UV Stability test) and the effect of UV exposure on gloss measured. Results are shown in Table 9 below.

**TABLE 9**

| Exposure (hrs) |  | 0 | 54 | 100 | 189 | 267 | 523 | 1000 | 1504 | 2000 |
|---|---|---|---|---|---|---|---|---|---|---|
| Gloss | I | 83 | 83 | 84 | 85 | 84 | 83 | 85 | 85 | 82 |
|  | J | 81 | 82 | 80 | 83 | 83 | 84 | 82 | 81 | 80 |
|  | K | 84 | 84 | 84 | 83 | 83 | 83 | 82 | 80 | 78 |
|  | L | 82 | 83 | 84 | 84 | 83 | 83 | 82 | 80 | 78 |

**Claims**

1. The use, in a powder coating composition-comprising a mixture, in particulate form, of titanium dioxide and an organic resin, of a zeolite as an extender for the titanium dioxide, said zeolite containing less than 9 per cent water by weight as determined by heating at 800° C for 1 hour.

2. A composition suitable for use as a powder coating comprising a mixture. In particulate form of a zeolite and an organic resin, said resin being a plasticised poly(vinyl chloride), a polyamide, poly(vinylidene fluoride), an epoxy resin, a polyester resin, a hybrid epoxy-polyester resin, a urethane resin or an acrylic resin and said zeolite containing less than 9 per cent water by weight as determined by heating at 800°C for 1 hour.

3. The use of composition according to claim 1 or 2 **characterised in that** the zeolite is a zeolite A or a zeolite P.

4. The use of composition according to any one of claims 1 to 3 **characterised in that** the zeolite contains less than 7 per cent by weight water, as determined by heating at 800°C for 1 hour.

5. The use or composition according to any one of the preceding claims **characterised in that** the zeolite has a water loss after heating at 105°C for 4 hours of less than 2 per cent by weight.

6. The use of composition according to any one of the preceding claims **characterised in that** the zeolite has a weight mean particle size in the range 0.5 $\mu$m to 6.0 $\mu$m.

7. The use or composition according to any one of the preceding claims **characterised in that** the composition additionally comprises from 10 to 40 per cent by weight pigmentary titanium dioxide.

8. The use or composition according to claim 7 **characterised in that** the amount of zeolite present is up to 20 per cent by weight of the composition.

9. The use or composition according to any one of claims 1 to 6 **characterised in that** the composition additionally contains a coloured pigment and from 2 to 20 weight per cent pigmentary titanium dioxide.

10. The use or composition according to claim 9 **characterised in that** the amount of zeolite present in the composition is from 0.5 to 6 per cent by weight of the coating composition.

11. The use or composition according to any one of the preceding claims **characterised in that** the particles of the composition have an average size in the range 10 to 75 $\mu$m.

12. The use or composition according to any one of the preceding claims **characterised in that** the particles of the composition have an average size in the range 40 to 200 $\mu$m.

13. The use according to Claim 1 in which the organic resin is a plasticised poly(vinyl chloride), a polyamide, a polyolefin, poly(vinyldene fluoride), an epoxy resin, a polyester resin, a hybrid epoxy-polyester resin, a urethane resin or an acrylic resin.

14. A method of preparing a powder coating composition comprising forming an intimate mixture of an organic resin and a zeolite, said resin being a plasticised poly(vinyl chloride), a polyamide, poly(vinylidene fluoride), an expoxy resin, a polyester resin, a hybrid epoxy-polyester resin a urethane resin or an acrylic resin and said zeolite containing less than 9 per cent water by weight as determined by heating at 800° C for 1 hour.

**Patentansprüche**

1. Verwendung eines Zeoliths in einer Pulverbeschichtungszusammensetzung aufweisend eine teilchenförmige Mischung aus Titandioxid und einem organischen Harz als ein Streckmittel für das Titandioxid, welcher Zeolith weniger als 9 Gew.-% Wasser, die durch Erwärmen bei 800°C während einer Stunde bestimmt sind, enthält.

2. Zur Verwendung als eine Pulverbeschichtung geeignete Zusammensetzung aufweisend eine teilchenförmige Mischung aus einem Zeolithen und einem organischen Harz, welches Harz ein plastifiziertes Poly(vinylchlorid), ein Polyamid, Poly(vinylidenfluorid), ein Epoxidharz, ein Polyesterharz, ein hybrides Epoxid-Polyesterharz, ein Urethanharz oder ein Acrylharz ist, und der Zeolith weniger als 9 Gew.-% Wasser, die durch Erwärmen bei 800°C während einer Stunde bestimmt sind, enthält.

3. Verwendung oder Zusammensetzung nach Anspruch 1 oder 2, **dadurch gekennzeichnet, dass** der Zeolith ein Zeolith A oder ein Zeolith P ist.

4. Verwendung oder Zusammensetzung nach einem der Ansprüche 1 bis 3, **dadurch gekennzeichnet, dass** der Zeolith weniger als 7 Gew.-% Wasser, die durch Erwärmen bei 800°C während einer Stunde bestimmt sind, enthält.

5. Verwendung oder Zusammensetzung nach einem der vorhergehenden Ansprüche, **dadurch gekennzeichnet, dass** der Zeolith einen Wasserverlust bei 105°C während 4 Stunden von weniger als 2 Gew.-% hat.

6. Verwendung oder Zusammensetzung nach einem der vorhergehenden Ansprüche, **dadurch gekennzeichnet, dass** der Zeolith eine gewichtmittlere Teilchengröße im Bereich von 0,5 $\mu$m bis 6,0 $\mu$m hat.

7. Verwendung oder Zusammensetzung nach einem der vorhergehenden Ansprüche, **dadurch gekennzeichnet, dass** die Zusammensetzung zusätzlich von 10 bis 40 Gewichtsprozent pigmenthaftes Titandioxid aufweist.

8. Verwendung oder Zusammensetzung nach Anspruch 7, **dadurch gekennzeichnet, dass** die Menge von vorhandenem Zeolith bis zu 20 Gew.-% der Zusammensetzung ist.

9. Verwendung oder Zusammensetzung nach einem der Ansprüche 1 bis 6, **dadurch gekennzeichnet, dass** die Zusammensetzung zusätzlich ein gefärbtes Pigment und von 2 bis 20 Gew.-% pigmenthaftes Titandioxid enthält.

10. Verwendung oder Zusammensetzung nach Anspruch 9, **dadurch gekennzeichnet, dass** die Menge von in der Zusammensetzung vorhandem Zeolith von 0,5 bis 8 Gew.-% der Beschichtungszusammensetzung beträgt.

**11.** Verwendung oder Zusammensetzung nach einem der vorhergehenden Ansprüche, **dadurch gekennzeichnet, dass** die Teilchen der Zusammensetzung eine durchschnittliche Größe im Bereich von 10 bis 75 $\mu$m haben.

**12.** Verwendung oder Zusammensetzung nach einem der vorhergehenden Ansprüche, **dadurch gekennzeichnet, dass** die Teilchen der Zusammensetzung eine durchschnittliche Größe im Bereich von 40 bis 200 $\mu$m haben.

**13.** Verwendung nach Anspruch 1, bei der das organische Harz ein plastifiziertes Poly(vinylchlorid), ein Polyamid, ein Polyolefin, Poly(vinylidenfluorid), ein Epoxidharz, ein Polyesterharz, ein hybrides Epoxid-Polyesterharz, ein Urethanharz oder ein Acrylharz ist.

**14.** Verfahren zum Herstellen einer Pulverbeschichtungszusammensetzung, aufweisend die Bildung einer innigen Mischung aus einem organischen Harz und einem Zyolit, welches Harz ein plastifiziertes Poly(vinylchlorid), ein Polyamid, Poly(vinylidenfluorid), ein Epoxidharz, ein Polyesterharz, ein hybrides Epoxid-Polyesterharz, ein Urethanharz oder ein Acrylharz ist und der Zeolith weniger als 9 Gew.-% Wasser, die durch Erwärmen bei 800°C während einer Stunde bestimmt sind, enthält.

**Revendications**

**1.** Utilisation, dans une composition de revêtement pulvérulente comprenant un mélange, sous forme particulaire, de dioxyde de titane et d'une résine organique, d'une zéolite comme extendeur pour le dioxyde de titane, ladite zéolite contenant moins de 9 % d'eau en masse comme déterminé par chauffage à 800°C pendant 1 h.

**2.** Composition appropriée pour être utilisée comme revêtement pulvérulent comprenant un mélange, sous forme particulaire, d'une zéolite et d'une résine organique, ladite résine étant un poly(chlorure de vinyle) plastifié, un polyamide, le poly(fluorure de vinylidène), une résine époxyde, une résine de polyester, une résine époxy-polyester hybride, une résine d'uréthane ou une résine acrylique et ladite zéolite contenant moins de 9 % d'eau en masse comme déterminé par chauffage à 800°C pendant 1 h.

**3.** Utilisation ou composition selon la revendication 1 ou 2, **caractérisée en ce que** la zéolite est une zéolite A ou une zéolite P.

**4.** Utilisation ou composition selon l'une quelconque des revendications 1 à 3, **caractérisée en ce que** la zéolite contient moins de 7 % en masse d'eau, comme déterminé par chauffage à 800°C pendant 1 h.

**5.** Utilisation ou composition selon l'une quelconque des revendications précédentes, **caractérisée en ce que** la zéolite a une perte d'eau après chauffage à 105°C pendant 4 h inférieure à 2 % en masse.

**6.** Utilisation ou composition selon l'une quelconque des revendications précédentes, **caractérisée en ce que** la zéolite a une dimension particulaire moyenne en masse dans la plage de 0,5 $\mu$m à 6,0 $\mu$m.

**7.** Utilisation ou composition selon l'une quelconque des revendications précédentes, **caractérisée en ce que** la composition comprend en outre de 10 à 40 % en masse de dioxyde de titane pigmentaire.

**8.** Utilisation ou composition selon la revendication 7, **caractérisée en ce que** la quantité de zéolite présente peut atteindre 20 % en masse de la composition.

**9.** Utilisation ou composition selon l'une quelconque des revendications 1 à 6, **caractérisée en ce que** la composition contient en outre un pigment coloré et de 2 à 20 % en masse de dioxyde de titane pigmentaire.

**10.** Utilisation ou composition selon la revendication 9, **caractérisée en ce que** la quantité de zéolite présente dans la composition est de 0,5 à 8 % en masse de la composition de revêtement.

**11.** Utilisation ou composition selon l'une quelconque des revendications précédentes, **caractérisée en ce que** les particules de la composition ont une dimension moyenne dans la plage de 10 à 75 $\mu$m.

**12.** Utilisation ou composition selon l'une quelconque des revendications précédentes, **caractérisée en ce que** les particules de la composition ont une dimension moyenne dans la plage de 40 à 200 $\mu$m.

**13.** Utilisation selon la revendication 1 où la résine organique est un poly(chlorure de vinyle) plastifié, un polyamide, une polyoléfine, le poly(fluorure de vinylidène), une résine époxyde, une résine de polyester, une résine époxy-polyester hybride, une résine d'uréthane ou une résine acrylique.

**14.** Procédé de préparation d'une composition de revêtement pulvérulente comprenant la formation d'un mélange intime d'une résine organique et d'une zéolite, ladite résine étant un poly(chlorure de vinyle) plastifié, un polyamide, le poly(fluorure de vinylidène), une résine époxyde, une résine de polyester, une résine époxy-polyester hybride, une résine d'uréthane ou une résine acrylique et ladite zéolite contenant moins de 9 % d'eau en masse comme déterminé par chauffage à 800°C pendant 1 h.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5684066 A
- EP 0384070 A
- EP 0565364 A
- EP 0697010 A
- EP 0742780 A
- WO 9614270 A
- WO 9634828 A
- WO 9706102 A

**Non-patent literature cited in the description**

- **DONALD W. BRECK.** Zeolite Molecular Sieves. Robert E. Krieger Publishing Company